# EUROPÄISCHE PATENTSCHRIFT

(11) **EP 1 994 620 B1**
(45) Veröffentlichungstag und Bekanntmachung des Hinweises auf die Patenterteilung: **15.11.2017**
(21) Anmeldenummer: 07704173.9
(22) Anmeldetag: 26.01.2007
(51) Int. Cl.: H02H 7/04, H02H 5/06, H02H 3/00

(54) **SCHUTZEINRICHTUNG UND VERFAHREN ZUM ÜBERWACHEN DER GERÄTETEMPERATUR EINES GERÄTES**
PROTECTIVE DEVICE AND METHOD FOR MONITORING THE APPLIANCE TEMPERATURE OF AN APPLIANCE
DISPOSITIF DE PROTECTION ET PROCÉDÉ DE CONTRÔLE DE LA TEMPÉRATURE D'UN APPAREIL

(30) Priorität: 14.03.2006 DE 102006012170
(43) Veröffentlichungstag der Anmeldung: 26.11.2008
(73) Patentinhaber: Siemens Aktiengesellschaft, 80333 München (DE)
(72) Erfinder: SORG, Fritz, 70180 Stuttgart (DE); WAHL, Herbert, 74544 Michelbach/Bilz (DE)
(86) Internationale Anmeldenummer: PCT/EP2007/050783
(87) Internationale Veröffentlichungsnummer: WO 2007/104598

(56) Entgegenhaltungen:
- DE-A1- 19 510 970
- US-A- 2 896 152
- US-A- 3 849 705

## Beschreibung

Die Erfindung bezieht sich auf eine Schutzeinrichtung zum Überwachen der Gerätetemperatur eines Gerätes, insbesondere zum Überwachen der Gerätetemperatur eines Transformators, eines Motors oder eines Generators, mit den Merkmalen gemäß dem Oberbegriff des Anspruchs 1.

Eine derartige Schutzeinrichtung wird von der Firma ZIEHL industrie-elektronik GmbH unter dem Produktnamen MSF 220V/VU vertrieben. Die vorbekannte Schutzeinrichtung ist mit einem Temperaturmessgrößeneingang zur Eingabe einer Gerätetemperaturmessgröße ausgestattet. Mit dem Temperaturmessgrößeneingang steht eine Steuereinrichtung in Verbindung, die einen Steuerausgang zur Ausgabe eines Kühl- bzw.
Lüfteraktivierungssignals aufweist. Die Steuereinrichtung erzeugt nach Überschreiten eines vorgegebenen Kühlaktivierungstemperaturwerts das Kühlaktivierungssignal, um einen ausgangsseitig angeschlossenen Lüfter zu aktivieren. Überschreitet die Gerätetemperatur einen vorgegebenen Abschalttemperaturwert, so wird ein Abschaltsignal zum Abschalten des Geräts erzeugt.

Die DE 195 10 970 A1 betrifft eine Temperaturüberwachungseinrichtung für einen Transformator, der von einem Lüfter gekühlt werden kann. Der Transformator weist ein Aktivteil auf, wobei der über das Aktivteil fließende Strom mit Hilfe eines Sensors überwacht wird. Der Sensor erzeugt anhand des von ihm erfassten Stromflusses ein dem Laststrom nachgebildetes Temperatursignal, das von einer Anzeige angezeigt wird. Überschreitet die nachgebildete Temperatur einen ersten Schwellenwert, wird der Lüfter aktiviert. Übersteigt die Temperatur einen weiteren Schwellenwert, wird darüber hinaus ein Warnsignal erzeugt. Wird ein dritter, noch höher gelegener Schwellenwert erreicht, wird der Transformator vom Netz getrennt.

Die US 2896152 betrifft ein Kühlsystem für einen feststoffisolierten Transformator. Das Kühlsystem erfasst zum einen die Temperatur eines von dem Aktivteil des Transformators erwärmten Luftstromes. Darüber hinaus wird der über das Aktivteil des Transformators fließende Strom erfasst. Weiterhin sind zwei Steuerungseinheiten 25, 125 offenbart, wobei eine erste Steuerungseinheit ein Warnsignal früher erzeugt als die andere Steuerungseinheit 25. Die Steuerungseinheiten unterscheiden jedoch nicht zwischen einem Kühlbetriebsmodus und einem Normalbetriebsmodus.

Die US 3,849,705 offenbart ebenfalls eine Kühlung für einen Transformator, wobei die Kühleinheit mit drei Schwellenwerten parametrisiert ist. Bei einem Schwellenwert von 205°C wird ein Lüfter eingeschaltet und bei einer Temperatur von 220°C ein Alarmsignal ausgelöst. Übersteigt die Temperatur einen Wert von 230°C, wird schließlich ein Leistungsschalter betätigt, der den Transformator vom Netz trennt.

Der Erfindung liegt die Aufgabe zugrunde, eine Schutzeinrichtung anzugeben, die ein verbessertes Schutzverhalten zeigt und insbesondere verhindert, dass im Falle eines Kühlbetriebs ein Geräteschaden wegen Überhitzung auftreten kann.

Diese Aufgabe wird erfindungsgemäß durch eine Schutzeinrichtung mit einer Steuereinrichtung gelöst, die nach einem Erzeugen des Kühlaktivierungssignals in einen Kühlbetriebsmodus übergeht, wobei sie im Kühlbetriebsmodus zusätzlich prüft, ob die Gerätetemperatur einen für den Kühlbetrieb vorgegebenen Grenztemperaturwert, der kleiner als der Abschalttemperatur-Ein wesentlicher Vorteil der erfindungsgemäßen Schutzeinrichtung ist darin zu sehen, dass diese auch während eines Kühlbetriebes, beispielsweise eines Lüfterbetriebs, zuverlässig arbeitet. Erfinderseitig wurde nämlich festgestellt, dass während eines Kühlbetriebs eine sehr ungleichmäßige Temperaturverteilung innerhalb des gekühlten Geräts auftreten kann. So kann es unter Umständen zu einer lokalen Überhitzung des Gerätes - beispielsweise im Geräteinneren - kommen, obwohl die gemessene Gerätetemperatur noch unterhalb eines vorgegebenen, für einen Betrieb ohne Kühleinrichtung zulässigen Abschalttemperaturwerts liegt. Um dieses Problem in den Griff zu bekommen, wird erfinderseitig vorgeschlagen, unterschiedliche Abschalttemperaturwerte heranzuziehen, nämlich einen für einen Betrieb ohne Kühlung und einen niedrigeren für einen Betrieb mit Kühlung. Erfindungsgemäß wird also während eines Kühlbetriebs das Abschaltsignal bereits bei einer kleineren Gerätetemperatur erzeugt als während eines Betriebs ohne Kühlung.

Als Kühleinrichtung kann beispielsweise ein Lüfter verwendet werden, der durch das Kühlaktivierungssignal gesteuert wird. Das Kühlaktivierungssignal bildet in diesem Falle also ein Lüfteraktivierungssignal.

Vorzugsweise ist die Steuereinrichtung derart ausgestaltet, dass sie nach einem Erzeugen des Kühlaktivierungssignals zunächst für eine vorgegebene Zeitspanne in einen Beobachtungsmodus schaltet, bevor sie in den Kühlbetriebsmodus wechselt. Diese Variante bietet den Vorteil, dass nach einem Einschalten einer Kühleinrichtung ein neuer niedriger Grenztemperaturwert nicht sofort, sondern verzögert, verwendet wird und dadurch vermieden wird, dass das Gerät unmittelbar abgeschaltet wird; dies wäre beispielsweise der Fall, wenn der Grenztemperaturwert kleiner als der Kühlaktivierungstemperaturwert eingestellt ist. Durch den Beobachtungsmodus wird dem Gerät also Zeit gegeben, nach dem Einschalten der Kühleinrichtung zunächst abzukühlen, wodurch ein zu frühes Abschalten des Gerätes verhindert wird.

Bevorzugt ist die Steuereinrichtung derart ausgestaltet, dass sie während des Beobachtungsmodus ein Warnsignal erzeugt, wenn die Gerätetemperatur nach Einschalten des Kühlbetriebs zwar zunächst sinkt, jedoch anschließend wieder ansteigt. Ein solcher Temperaturverlauf deutet nämlich auf einen Fehler hin, weil bei gleich bleibender Belastung des Geräts davon auszugehen ist, dass die Gerätetemperatur nach dem Einschalten der Kühleinrichtung kontinuierlich auf ihren neuen zulässigen Betriebswert abfällt und dort verbleibt.

Um Geräteschäden zu vermeiden, wird das Abschaltsignal während des Beobachtungsmodus vorzugsweise dann erzeugt, wenn die Gerätetemperatur nach dem Einschalten des Kühlbetriebs zunächst sinkt, anschließend jedoch wieder ansteigt und dabei noch über dem Grenztemperaturwert liegt. Auch kann während des Beobachtungsmodus das Abschaltsignal erzeugt werden, wenn die Gerätetemperatur nach Einschalten des Kühlbetriebs zunächst zwar unter den Grenztemperaturwert sinkt, anschließend jedoch wieder über den Grenztemperaturwert ansteigt.

Im Übrigen wird es als vorteilhaft angesehen, wenn die Steuereinrichtung nach Ablauf der vorgegebenen Zeitspanne zunächst ein Warnsignal erzeugt, wenn die Gerätetemperatur den Grenztemperaturwert noch überschreitet. Das Abschaltsignal kann beispielsweise erst nach Ablauf einer Wartephase erzeugt werden, sofern die Gerätetemperatur den Grenztemperaturwert dann immer noch überschreitet.

Im Hinblick auf eine hohe Messgenauigkeit wird es als vorteilhaft angesehen, wenn die Steuereinrichtung Auswertintervalle bildet, in denen die eingangsseitig anliegende Gerätetemperaturmessgröße zeitlich gemittelt wird. In diesem Falle entspricht die Länge der Wartephase vorzugsweise der Länge eines solchen Auswertintervalls.

Im Übrigen kann die Steuereinrichtung auch derart ausgestaltet sein, dass sie - ggf. auch vor Ablauf der vorgegebenen Zeitspanne - von dem Beobachtungsmodus in den Kühlbetriebsmodus schaltet, sobald die Gerätetemperatur einen vorgegebenen Umschalttemperaturwert unterschreitet.

Der vorgegebene Umschalttemperaturwert ist vorzugsweise kleiner als der Grenztemperaturwert. Beispielsweise entspricht der vorgegebene Umschalttemperaturwert einem vorgegebenen Kühlbetriebswarntemperaturwert zuzüglich eines vorgegebenen Hysteresewerts. Alternativ kann der vorgegebene Umschalttemperaturwert auch gleich dem Grenztemperaturwert sein.

Vorzugsweise erzeugt die Steuereinrichtung nach Übergang in den Kühlbetriebsmodus ein Warnsignal, wenn die Gerätetemperatur den Kühlbetriebswarntemperaturwert überschreitet.

Im Hinblick auf eine maximale Betriebssicherheit wird es als vorteilhaft angesehen, wenn die Steuereinrichtung in jedem ihrer Betriebsmodi das Abschaltsignal erzeugt, sobald die Gerätetemperatur den für den Normalbetrieb ohne Kühlung vorgegebenen Abschalttemperaturwert überschreitet.

Auch wird es als vorteilhaft angesehen, wenn die Steuereinrichtung in jedem ihrer Betriebsmodi ein Warnsignal erzeugt, sobald die Gerätetemperatur einen für den Normalbetrieb ohne Kühlung vorgegebenen Hauptwarnwert überschreitet.

Der Grenztemperaturwert kann beispielsweise kleiner als der Kühlaktivierungstemperaturwert eingestellt werden: In diesem Fall muss die Gerätetemperatur nach Einschalten der Kühleinrichtung somit unter diesen Grenztemperaturwert fallen, damit ein Abschalten des Gerätes verhindert wird.

Die Erfindung bezieht sich außerdem auf ein Verfahren zum Überwachen der Gerätetemperatur eines Gerätes, insbesondere zum Überwachen der Gerätetemperatur eines Transformators, eines Motors oder eines Generators, wobei bei dem Verfahren eine die Gerätetemperatur angebende Gerätetemperaturmessgröße gemessen wird und nach Überschreiten eines vorgegebenen Kühlaktivierungstemperaturwerts durch die Gerätetemperatur ein Kühlaktivierungssignal erzeugt wird und bei dem nach Überschreiten eines vorgegebenen Abschalttemperaturwerts, der größer als der Kühlaktivierungstemperaturwert ist, ein Abschaltsignal zum Abschalten des Geräts erzeugt wird.

Erfindungsgemäß ist vorgesehen, dass nach einem Erzeugen des Kühlaktivierungssignals mit oder ohne zwischengeschaltetem Beobachtungsmodus in einen Kühlbetriebsmodus geschaltet wird, wobei im Kühlbetriebsmodus zusätzlich geprüft wird, ob die Gerätetemperatur einen für den Kühlbetrieb vorgegebenen Grenztemperaturwert, der kleiner als der Abschalttemperaturwert ist, überschreitet. Im Falle des Überschreitens des Grenztemperaturwerts wird das Abschaltsignal erzeugt.

Bezüglich der Vorteile des erfindungsgemäßen Verfahrens sowie bezüglich vorteilhafter Ausgestaltungen des erfindungsgemäßen Verfahrens sei auf die obigen Ausführungen im Zusammenhang mit der erfindungsgemäßen Schutzeinrichtung verwiesen.

Die Erfindung wird nachfolgend anhand von Ausführungsbeispielen näher erläutert. Dabei zeigen beispielhaft
- Figur 1: ein Ausführungsbeispiel für eine erfindungsgemäße Schutzeinrichtung, und
- Figuren 2 bis 6: zeitliche Temperaturverläufe, anhand derer Ausführungsbeispiele für erfindungsgemäße Betriebsarten der Schutzeinrichtung gemäß Figur 1 näher erläutert werden.

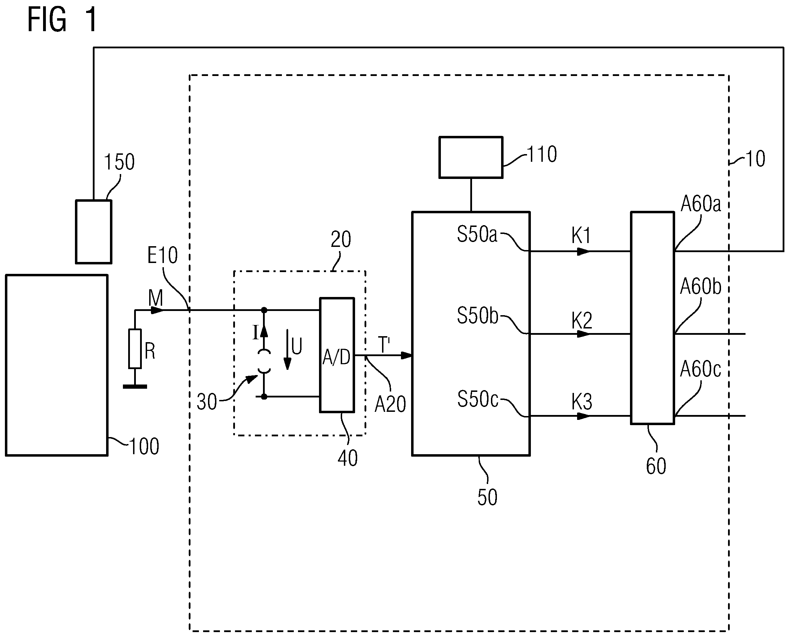

In der Figur 1 erkennt man eine Schutzeinrichtung 10, die mit einem Temperaturmessgrößeneingang E10 an eine Temperaturmesseinrichtung, beispielsweise an einen temperaturabhängigen Widerstand R (z. B. Widerstand des Typs PT100) angeschlossen ist. Mit dem Temperaturmessgrößeneingang E10 steht eine Temperaturwandlereinrichtung 20 in Verbindung, die beispielsweise eine Stromquelle 30 sowie einen nachgeschalteten A/D-Wandler umfassen kann.

Mit einem Ausgang A20 der Temperaturwandlereinrichtung 20 ist eine Steuereinrichtung 50 verbunden, die über drei Steuerausgänge S50A, S50B sowie S50C mit einer Ausgabeeinrichtung 60 in Verbindung steht. Bei der Ausgabeeinrichtung 60 handelt es sich beispielsweise um eine Relaiseinrichtung, deren Relaisausgänge A60A, A60B und A60C Ausgänge der Schutzeinrichtung 10 bilden.

Die Steuereinrichtung 50 misst mit ihrer Temperaturwandlereinrichtung 20 eine Gerätetemperatur T eines elektrischen Gerätes 100, das der Übersichtlichkeit halber in der Figur 1 nur schematisch dargestellt ist. Hierzu wertet die Temperaturwandlereinrichtung 20 die von dem Widerstand R gebildete Temperaturmessgröße M aus und erzeugt ausgangsseitig einen Temperaturmesswert T', der der Gerätetemperatur T des Gerätes 100 entspricht.

Zur Bildung des Temperaturmesswertes T' erzeugt die Stromquelle 30 beispielsweise einen Konstantstrom I, der durch den Widerstand R fließt und einen temperaturabhängigen Spannungsabfall U erzeugt. Dieser temperaturabhängige Spannungsabfall U wird von dem Analog/Digital-Wandler 40 erfasst, der mit diesem den digitalen Temperaturmesswert T' bildet.

Der digitale Temperaturmesswert T' gelangt zu der Steuereinrichtung 50, die beispielsweise durch eine programmierbare Mikroprozessoranordnung gebildet ist. Ein oder mehrere Steuerprogramme zum Programmieren der Steuereinrichtung 50 sind beispielsweise in einem Speicherbaustein 110 hinterlegt, der mit der Steuereinrichtung 50 in Verbindung steht.

Die Steuereinrichtung 50 wertet die von der Temperaturwandlereinrichtung 20 gelieferten digitalen Temperaturmesswerte T' in ihrem zeitlichen Verlauf aus und erzeugt ausgangsseitig Signale K1, K2 und K3, die auf einen etwaigen Fehler des Gerätes 100 hindeuten. Eines der von der Steuereinrichtung 50 gebildeten Signale ist ein Kühlaktivierungssignal in Form eines Lüfteraktivierungssignals K1, das von einer logischen 0 auf eine logische 1 geschaltet wird, wenn die Steuereinrichtung 50 erkennt, dass die Gerätetemperatur T des Gerätes 100 so groß geworden ist, dass mit einem externen Lüfter 150 eine Kühlung des Gerätes 100 hervorgerufen werden sollte.

Bei dem Signal K2 handelt es sich um ein Warnsignal, das angibt, dass die Gerätetemperatur T des Gerätes 100 einen kritischen Bereich erreicht hat. Das Warnsignal K2 dient dabei lediglich zu einer Signalisierung dieses Zustandes; zu einem Abschalten des Gerätes 100 kommt es durch das Warnsignal K2 noch nicht.

Bei dem dritten Signal K3 handelt es sich um ein Abschaltsignal, dass die Steuereinrichtung 50 erzeugt, wenn die Gerätetemperatur T einen Temperaturbereich erreicht hat, bei dem es zu einer Beschädigung des Gerätes 100 kommen kann und eine Abschaltung des Gerätes erforderlich ist.

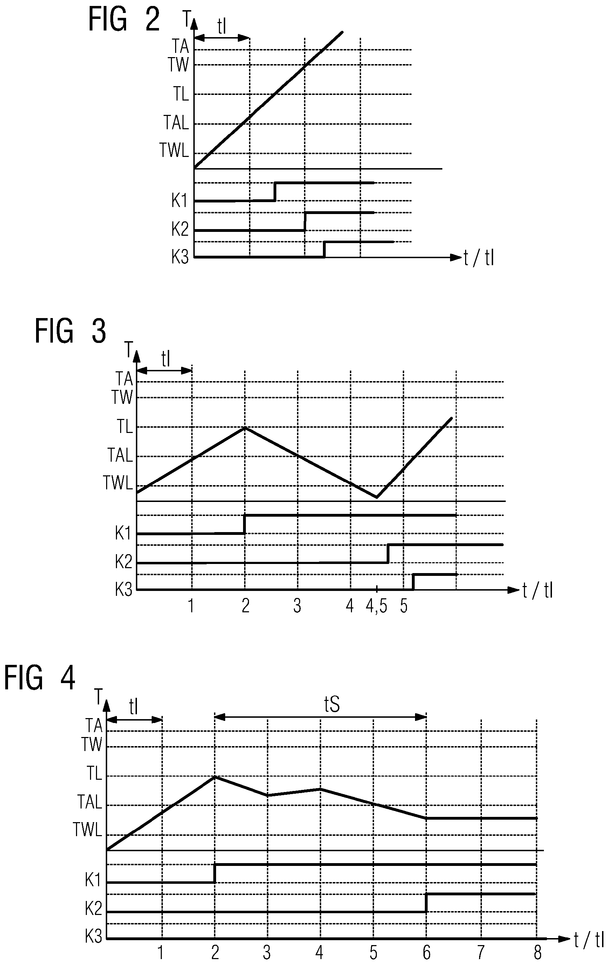

Anhand der Figuren 2 bis 6 wird nachfolgend beispielhaft erläutert, wie die Steuereinrichtung 50 programmiert sein kann und arbeitet.

In der Figur 2 erkennt man den Verlauf der Gerätetemperatur T in Abhängigkeit von der Zeit t für den Fall eines Gerätefehlers, bei dem die Gerätetemperatur T kontinuierlich ansteigt. In einem solchen Fall wird die Steuereinrichtung 50 feststellen, dass die Temperatur T einen vorgegebenen Kühlaktivierungstemperaturwert, beispielsweise einen vorgegebenen Lüfteraktivierungstemperaturwert TL, überschreitet. In diesem Fall erzeugt sie ausgangsseitig das Lüfteraktivierungssignal K1 mit einer logischen 1, damit der an den Relaisausgang A60A der Relaiseinrichtung 60 angeschlossene Lüfter 150 in Betrieb genommen wird.

Im Zusammenhang mit dem Ausführungsbeispiel gemäß der Figur 2 wird nun davon ausgegangen, dass trotz eines Einschaltens des Lüfters 150 die Gerätetemperatur T des Gerätes 100 wegen eines internen Fehlers weiter ansteigt und dass das Zuschalten des Lüfters ohne Einfluss bleibt. In diesem Fall wird die Gerätetemperatur T einen vorgegebenen Hauptwarnwert TW überschreiten, was von der Steuereinrichtung 50 erkannt wird. In diesem Fall wird die Steuereinrichtung 50 ausgangsseitig zunächst das Warnsignal K2 mit einer logischen 1 erzeugen und dieses über die Relaiseinrichtung 60 an dem Relaisausgang A60B der Relaiseinrichtung 60 anzeigen. Ein Benutzer des Gerätes 100 hat somit die Möglichkeit, den auftretenden Gefahrenzustand zu erkennen und manuell Abhilfemaßnahmen einzuleiten. Dies trifft auch für den Fall zu, dass das Gerät 100 bei Überlast betrieben wird und der externe Lüfter 150 nicht oder nur unzureichend kühlt.

Steigt nun die Gerätetemperatur T des Gerätes 100 weiter an und erreicht diese einen vorgegebenen Abschalttemperaturwert TA, so erzeugt die Steuereinrichtung 50 an ihrem Steuerausgang S50C das Abschaltsignal K3 und überträgt dieses über den Relaisausgang A60C der Relaiseinrichtung 60 nach draußen. Bei Vorliegen des Abschaltsignals K3 wird das Gerät 100 unmittelbar abgeschaltet.

Im Zusammenhang mit der Figur 3 soll nun erläutert werden, wie die Schutzeinrichtung 10 arbeitet, wenn das Gerät 100 nicht defekt ist und nach einem Einschalten des Lüfters 150 abgekühlt wird. Der zeitliche Verlauf der Gerätetemperatur T ist in der Figur 3 dargestellt. Man erkennt, dass nach dem Zeitpunkt t = 2*tl die Gerätetemperatur T den Lüfteraktivierungstemperaturwert TL überschreitet, so dass der Lüfterbetrieb des Lüfters 150 aktiviert wird; aufgrund des Einschaltens des Lüfters 150 wird sich die Gerätetemperatur T reduzieren. Bei dem Ausführungsbeispiel gemäß der Figur 3 erreicht die Gerätetemperatur T nachfolgend einen unkritischen Wert, der unterhalb einem Lüfterbetriebswarntemperaturwert TWL liegt.

Beispielhaft wird nun davon ausgegangen, dass zu einem Zeitpunkt t = 4,5 * tl das Gerät 100 defekt ist oder überlastet wird und es zu einem Anstieg der Gerätetemperatur T kommt. Die Temperatur wird dann den vorgegebenen Lüfterbetriebswarntemperaturwert TWL wieder überschreiten. In diesem Fall wird am Steuerausgang S50B der Steuereinrichtung 50 das Warnsignal K2 mit einer logischen 1 erzeugt. Sobald die Temperatur einen für den Lüfterbetriebsmodus vorgegebenen Grenztemperaturwert TAL überschreitet, wird das Abschaltsignal K3 von einer logischen 0 auf eine logische 1 geschaltet, so dass über den Relaisausgang A60C der Relaiseinrichtung 60 das Gerät 100 abgeschaltet wird.

Es lässt sich in der Figur 3 erkennen, dass es zu einem Erzeugen des Abschaltsignals K3 während des Lüfterbetriebsmodus zu einem sehr viel früheren Zeitpunkt bzw. bei niedrigeren Temperaturen kommt als während des im Zusammenhang mit der Figur 2 gezeigten Normalbetriebsmodus. Nach einem Unterschreiten eines vorgegebenen Umschalttemperaturwerts, der beispielsweise dem vorgegebenen Lüfterbetriebswarntemperaturwert TWL - ggf. zuzüglich eines vorgegebenen Hysteresewerts HWL - entspricht, schaltet die Steuereinrichtung 50 nämlich von ihrem Normalbetriebsmodus in einen Lüfterbetriebsmodus und reduziert bei diesem Umschalten die für das Erzeugen des Warnsignals K2 und des Abschaltsignals K3 vorgegebenen Temperaturschwellen. Bei dem im Zusammenhang mit der Figur 2 gezeigten Normalbetriebsmodus kommt es zu einem Erzeugen des Warnsignals K2 erst bei einem Überschreiten des Hauptwarnwertes TW und zu einem Erzeugen des Abschaltsignals K3 erst bei einem Überschreiten des Abschalttemperaturwerts TA. Im Unterschied dazu sind die entsprechenden Auslöseschwellen während des Lüfterbetriebsmodus geringer, weil nämlich das Erzeugen des Warnsignals K2 bereits bei Überschreiten des geringeren Lüfterbetriebswarntemperaturwerts TWL und das Erzeugen des Abschaltsignals K3 bereits bei Überschreiten des vorgegebenen Grenztemperaturwerts TAL erfolgt, der geringer ist als der Abschalttemperaturwert TA.

Bei dem Ausführungsbeispiel gemäß Figur 3 wird beispielhaft davon ausgegangen, dass die Gerätetemperatur T nach einem Einschalten des Lüfters 150 den Lüfterbetriebswarntemperaturwert TWL zügig unterschreitet und somit der Lüfterbetriebsmodus aktiviert wird. Im Falle eines Gerätefehlers oder bei unzulässigem Überlastbetrieb kann jedoch der Fall auftreten, dass die Gerätetemperatur T diesen Lüfterbetriebswarntemperaturwert TWL gar nicht oder nicht zügig genug unterschreitet. Um auch einen solchen Betriebszustand zu erfassen, sieht die Steuereinrichtung 50 gemäß Figur 1 vorzugsweise noch einen Beobachtungsmodus vor, der zeitlich zwischen dem in Figur 2 gezeigten Normalbetriebsmodus und dem im Zusammenhang mit der Figur 3 gezeigten Lüfterbetriebsmodus liegt. Dies soll nachfolgend näher im Zusammenhang mit den Figuren 4 bis 6 erläutert werden.

In der Figur 4 ist ein Fehlerfall oder ein unzulässiger Überlastbetrieb dargestellt, bei dem die Gerätetemperatur T nach einem Einschalten des Lüfters 150 zwar zunächst abfällt, jedoch danach wieder ansteigt und in einem Temperaturbereich zwischen dem Lüfteraktivierungstemperaturwert TL sowie dem Lüfterbetriebswarntemperaturwert TWL verbleibt. Um bei einem solchen Temperaturverlauf zu vermeiden, dass die Steuereinrichtung 50 im Beobachtungsmodus verbleibt, schaltet die Steuereinrichtung 50 nach Ablauf einer vorgegebenen Zeitspanne tS von dem Beobachtungsmodus in den Lüfterbetriebsmodus, in dem für das Auslösen des Warnsignals K2 und das Abschaltsignal K3 anstelle der relativ hohen Werte TW und TA die geringeren Werte TWL und TAL herangezogen werden. Da bei dem Ausführungsbeispiel gemäß Figur 4 die Gerätetemperatur nach Ablauf der Zeitspanne tS oberhalb des Lüfterbetriebswarntemperaturwerts TWL liegt, erzeugt die Steuereinrichtung 50 an ihrem Steuerausgang S50B dann das Warnsignal K2 mit einer logischen 1.

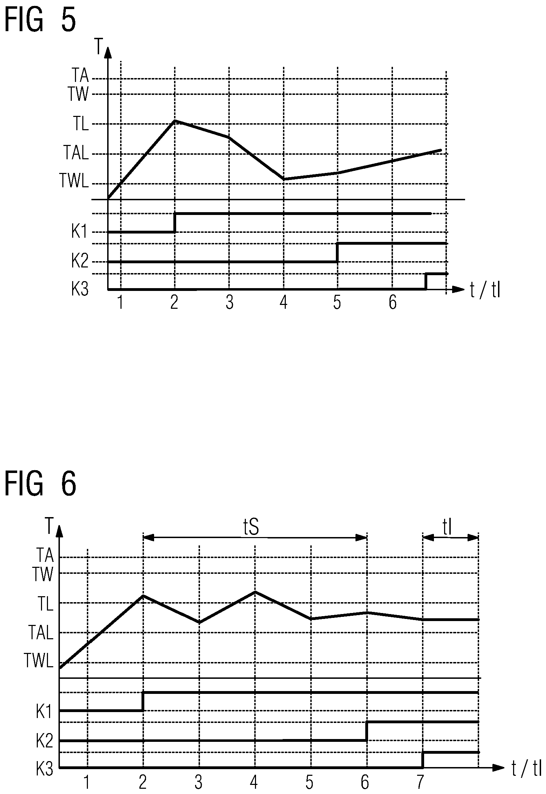

Im Zusammenhang mit der Figur 5 ist ein Betriebsfall dargestellt, bei dem es nach einem Einschalten des Lüfters 150 zunächst zu einem kontinuierlichen Abfall der Gerätetemperatur T bis zu einem Zeitpunkt T = 4*tl kommt. Die Gerätetemperatur T liegt dabei zwar unterhalb der Grenztemperatur TAL, sie überschreitet jedoch noch den Lüfterbetriebswarntemperaturwert TWL. Das Ansteigen der Gerätetemperatur T zu einem Zeitpunkt, bevor TWL unterschritten wird, wird von der Steuereinrichtung 50 erkannt, die daraufhin in den Lüfterbetriebsmodus schaltet und zum Zeitpunkt T = 5*tl an ihrem Steuerausgang S50B das Warnsignal K2 mit einer logischen 1 erzeugt. Kommt es im weiteren Verlauf zu einem weiteren Ansteigen der Gerätetemperatur T über den für den Lüfterbetrieb vorgegebenen Grenztemperaturwert TAL, so erzeugt die Steuereinrichtung 50 das Abschaltsignal K3 an ihrem Ausgang S50C, so dass das Gerät 100 abgeschaltet wird. Bei dem Ausführungsbeispiel gemäß der Figur 5 kommt es zu einem Übergang von dem Beobachtungsmodus in den Lüfterbetriebsmodus und damit nachfolgend zu einem Erzeugen des Warnsignals K2 und des Abschaltsignals K3, sobald die Steuereinrichtung 50 feststellt, dass die Gerätetemperatur T trotz des Einschaltens des Lüfters nicht unter den vorgegebenen Umschalttemperaturwert, der - wie bereits erwähnt - dem Lüfterbetriebswarntemperaturwert TWL, ggf. zuzüglich eines vorgegebenen Hysteresewerts HWL, entspricht, fällt und die Gerätetemperatur T über TAL steigt.

Das Scharfstellen in den Lüfterbetriebsmodus erfolgt somit bei dem Ausführungsbeispiel gemäß der Figur 5 nicht zeitgesteuert, wie bei dem Ausführungsbeispiel gemäß Figur 4, sondern in Abhängigkeit von dem qualitativen und quantitativen Verlauf der Gerätetemperatur T: Konkret wird von dem Beobachtungsmodus in den Lüfterbetriebsmodus umgeschaltet, sobald die Steuereinrichtung 50 erkennt, dass der Lüfterbetrieb zu einer Temperaturabsenkung unter TAL führt und danach ein Temperaturanstieg erfolgt.

In der Figur 6 ist nochmals ein Ausführungsbeispiel für einen Betrieb der Steuereinrichtung 50 gezeigt, bei dem es zu einem Umschalten von dem Beobachtungsmodus in den Lüfterbetriebsmodus kommt, sofern die Gerätetemperatur T des Geräts 100 innerhalb der vorgegebenen Zeitspanne tS nicht den vorgegebenen Umschalttemperaturwert T unterschreitet. In diesem Fall erzeugt die Steuereinrichtung 50 das Warnsignal K2 mit einer logischen 1, wenn die Gerätetemperatur T oberhalb des Lüfterbetriebswarntemperaturwerts TWL liegt. Liegt die Gerätetemperatur T außerdem über dem Grenztemperaturwert TAL, wie dies in der Figur 6 beispielhaft gezeigt ist, so erzeugt die Steuereinrichtung 50 - sei es sofort oder um t = tl verzögert - auch das Abschaltsignal K3 mit einer logischen 1.

Im Zusammenhang mit den in den Figuren 2 bis 6 gezeigten Temperaturdiagrammen wurden verschiedene mögliche Betriebsarten der Schutzeinrichtung 10 gemäß Figur 1 erläutert. Zu erwähnen ist in diesem Zusammenhang, dass diese nur beispielhaft zu verstehen sind. Ob zwischen dem Normalbetriebsmodus und dem Lüfterbetriebsmodus ein Beobachtungsmodus liegt und zu welchen Zeitpunkten ein Umschalten von dem Beobachtungsmodus in den Lüfterbetriebsmodus erfolgt, ist für das Grundprinzip der Schutzeinrichtung 10 gemäß Figur 1 nicht von Bedeutung. Wichtig ist lediglich, dass es nach einem Einschalten der Kühleinrichtung entweder sofort oder zu einem späteren Zeitpunkt - also beispielsweise nach einem Beobachtungsmodus - zu einem Erzeugen des Abschaltsignals K3 bei niedrigeren Temperaturen als im Normalbetriebsmodus ohne Kühlbetrieb kommt, weil anstelle der Abschalttemperatur TA während des Kühl- bzw. Lüfterbetriebs sofort oder verzögert ein kleinerer Grenztemperaturwert TAL < TA zugrunde gelegt wird.

### Bezugszeichenliste

- 10: Schutzeinrichtung
- 20: Temperaturwandlereinrichtung
- 30: Stromquelle
- 40: A/D-Wandler
- 50: Steuereinrichtung
- 60: Relaiseinrichtung
- 100: Gerät
- 150: Lüfter
- S50A, S50B, S50C: Steuerausgänge
- A20: Ausgang der Temperaturwandlereinrichtung
- A60a-c: Ausgänge der Schutzeinrichtung
- E10: Temperaturmessgrößeneingang
- K1: Lüfteraktivierungssignal
- K2: Warnsignal
- K3: Abschaltsignal
- TWL: Lüfterbetriebswarntemperatur
- TAL: Grenztemperaturwert
- TL: Lüfteraktivierungstemperaturwert
- TW: Hauptwarnwert
- TA: Abschalttemperaturwert
- HWL: Hysteresewert
- t: Zeit
- T: Gerätetemperatur
- M: Temperaturmessgröße
- T': Temperaturmesswert
- U: Spannungsabfall
- I: Strom
- R: Widerstand
- tl: Auswertintervall
- tS: vorgegebene Zeitspanne

## Patentansprüche

1. Schutzeinrichtung (10) zum Überwachen der Gerätetemperatur (T) eines Gerätes (100), insbesondere zum Überwachen der Gerätetemperatur eines Transformators, eines Motors oder eines Generators,
- mit einem Temperaturmessgrößeneingang (E10) zur Eingabe einer die Gerätetemperatur (T) angebenden Gerätetemperaturmessgröße (M) und einer mit dem Temperaturmessgrößeneingang (E10) in Verbindung stehenden Steuereinrichtung (50),
- wobei die Steuereinrichtung (50) einen Steuerausgang (S50a) zur Ausgabe eines Kühlaktivierungssignals (K1) aufweist sowie derart ausgestaltet ist, dass sie nach Überschreiten eines vorgegebenen Kühlaktivierungstemperaturwerts (TL) durch die Gerätetemperatur (T) das Kühlaktivierungssignal (K1) erzeugt und nach Überschreiten eines vorgegebenen Abschalttemperaturwerts (TA), der größer als der Kühlaktivierungstemperaturwert (TL) ist, ein Abschaltsignal (K3) zum Abschalten des Geräts erzeugt,
**dadurch gekennzeichnet, dass**
- die Steuereinrichtung (50) derart ausgestaltet ist, dass sie nach einem Erzeugen des Kühlaktivierungssignals (K1) in einen Kühlbetriebsmodus übergeht,
- wobei sie im Kühlbetriebsmodus zusätzlich prüft, ob die Gerätetemperatur (T) einen für den Kühlbetrieb vorgegebenen Grenztemperaturwert (TAL), der kleiner als der Abschalttemperaturwert (TA) ist, überschreitet, und im Falle des Überschreitens des Grenztemperaturwerts (TAL) das Abschaltsignal (K3) erzeugt.

2. Schutzeinrichtung nach Anspruch 1, **dadurch gekennzeichnet, dass** die Steuereinrichtung (50) derart ausgestaltet ist, dass sie nach dem Erzeugen des Kühlaktivierungssignals (K1) zunächst für eine vorgegebene Zeitspanne (tS) in einen Beobachtungsmodus schaltet, bevor sie in den Kühlbetriebsmodus wechselt.

3. Schutzeinrichtung nach Anspruch 2, **dadurch gekennzeichnet, dass** die Steuereinrichtung derart ausgestaltet ist, dass sie während des Beobachtungsmodus ein Warnsignal (K2) erzeugt, wenn die Gerätetemperatur (T) nach Einschalten des Kühlbetriebs zunächst sinkt und anschließend wieder ansteigt.

4. Schutzeinrichtung nach Anspruch 3, **dadurch gekennzeichnet, dass** die Steuereinrichtung derart ausgestaltet ist, dass sie während des Beobachtungsmodus das Abschaltsignal (K3) erzeugt, wenn die Gerätetemperatur (T) nach Einschalten des Kühlbetriebs zunächst zwar sinkt, anschließend jedoch wieder ansteigt und dabei noch über dem Grenztemperaturwert (TAL) liegt.

5. Schutzeinrichtung nach Anspruch 3 oder 4, **dadurch gekennzeichnet, dass** die Steuereinrichtung derart ausgestaltet ist, dass sie während des Beobachtungsmodus das Abschaltsignal (K3) erzeugt, wenn die Gerätetemperatur nach Einschalten des Kühlbetriebs zunächst zwar unter den Grenztemperaturwert (TAL) sinkt, anschließend jedoch wieder über den Grenztemperaturwert (TAL) ansteigt.

6. Schutzeinrichtung nach einem der voranstehenden Ansprüche 2-5, **dadurch gekennzeichnet, dass** die Steuereinrichtung derart ausgestaltet ist, dass sie nach Ablauf der vorgegebenen Zeitspanne (tS) zunächst ein Warnsignal (K2) erzeugt, wenn die Gerätetemperatur (T) den Grenztemperaturwert (TAL) noch überschreitet, und dass sie das Abschaltsignal (K3) erst nach Ablauf einer Wartephase erzeugt, sofern die Gerätetemperatur (T) den Grenztemperaturwert (TAL) dann immer noch überschreitet.

7. Schutzeinrichtung nach Anspruch 6, **dadurch gekennzeichnet, dass** die Länge der Wartephase der Länge eines Auswertintervalls (tl) der Steuereinrichtung entspricht.

8. Schutzeinrichtung nach einem der voranstehenden Ansprüche, **dadurch gekennzeichnet, dass** die Steuereinrichtung derart ausgestaltet ist, dass sie - gegebenenfalls auch vor Ablauf der vorgegebenen Zeitspanne (tS) - von dem Beobachtungsmodus in den Kühlbetriebsmodus schaltet, sobald die Gerätetemperatur (T) einen vorgegebenen Umschalttemperaturwert (TWL+HWL, TWL) unterschreitet.

9. Schutzeinrichtung nach Anspruch 8, **dadurch gekennzeichnet, dass** der vorgegebene Umschalttemperaturwert (TWL+HWL) kleiner als der Grenztemperaturwert (TAL) ist.

10. Schutzeinrichtung nach Anspruch 9, **dadurch gekennzeichnet, dass** der vorgegebene Umschalttemperaturwert (TWL+HWL) einem vorgegebenen Kühlbetriebswarntemperaturwert (TWL) zuzüglich eines vorgegebenen Hysteresewerts (HWL) entspricht.

11. Schutzeinrichtung nach Anspruch 8, **dadurch gekennzeichnet, dass** der vorgegebene Umschalttemperaturwert gleich dem vorgegebenen Kühlbetriebswarntemperaturwert (TWL) ist.

12. Schutzeinrichtung nach einem der voranstehenden Ansprüche, **dadurch gekennzeichnet, dass** die Steuereinrichtung derart ausgestaltet ist, dass sie nach Übergang in den Kühlbetriebsmodus ein Warnsignal (K2) erzeugt, wenn die Gerätetemperatur (T) den Kühlbetriebswarntemperaturwert (TWL) überschreitet.

13. Schutzeinrichtung nach einem der voranstehenden Ansprüche, **dadurch gekennzeichnet, dass** die Steuereinrichtung in jedem ihrer Betriebsmodi das Abschaltsignal (K3) erzeugt, sobald die Gerätetemperatur (T) den vorgegebenen Abschalttemperaturwert (TA) überschreitet.

14. Schutzeinrichtung nach einem der voranstehenden Ansprüche, **dadurch gekennzeichnet, dass** die Steuereinrichtung in jedem ihrer Betriebsmodi ein Warnsignal (K2) erzeugt, sobald die Gerätetemperatur (T) einen vorgegebenen Hauptwarnwert (TW) überschreitet.

15. Schutzeinrichtung nach einem der voranstehenden Ansprüche, **dadurch gekennzeichnet, dass** der Grenztemperaturwert (TAL) kleiner als der Kühlaktivierungstemperaturwert (TL) einstellbar ist.

16. Verfahren zum Überwachen der Gerätetemperatur (T) eines Gerätes (100), insbesondere zum Überwachen der Gerätetemperatur eines Transformators, eines Motors oder eines Generators, bei dem
- die Gerätetemperatur (T) gemessen wird,
- nach Überschreiten eines vorgegebenen Kühlaktivierungstemperaturwerts (TL) ein Kühlaktivierungssignal (K1) erzeugt wird und
- nach Überschreiten eines vorgegebenen Abschalttemperaturwerts (TA), der größer als der Kühlaktivierungstemperaturwert (TL) ist, ein Abschaltsignal (K3) zum Abschalten des Geräts erzeugt wird,
**dadurch gekennzeichnet, dass**
- nach einem Erzeugen des Kühlaktivierungssignals (K1) in einen Kühlbetriebsmodus geschaltet wird, wobei im Kühlbetriebsmodus zusätzlich geprüft wird, ob die Gerätetemperatur (T) einen für den Kühlbetrieb vorgegebenen Grenztemperaturwert (TAL), der kleiner als der Abschalttemperaturwert (TA) ist, überschreitet, und wobei im Falle des Überschreitens des Grenztemperaturwerts (TAL) das Abschaltsignal (K3) erzeugt wird.

## Claims

1. Protective device (10) for monitoring the appliance temperature (T) of an appliance (100), particularly for monitoring the appliance temperature of a transformer, of a motor or of a generator,
- having a temperature measured variable input (E10) for inputting an appliance temperature measured variable (M) indicating the appliance temperature (T) and a control device (50) connected to the temperature measured variable input (E10),
- where the control device (50) has a control output (S50a) for outputting a cooling activation signal (K1) and is in a form such that when the appliance temperature (T) exceeds a prescribed cooling activation temperature value (TL) it produces the cooling activation signal (K1) and when a prescribed switch-off temperature value (TA), which is greater than the cooling activation temperature value (TL), is exceeded it produces a switch-off signal (K3) for switching off the appliance,
**characterized in that**
- the control device (50) is in a form such that when the cooling activation signal (K1) has been produced it changes to a cooling mode of operation,
- where, in the cooling mode of operation, it additionally checks whether the appliance temperature (T) exceeds a limit temperature value (TAL) prescribed for the cooling mode, which is less than the switch-off temperature value (TA), and if the limit temperature value (TAL) is exceeded then it produces the switch-off signal (K3).

2. Protective device according to Claim 1, **characterized in that** the control device (50) is in a form such that when the cooling activation signal (K1) has been produced it first of all switches to an observation mode for a prescribed period of time (tS) before it changes to the cooling mode of operation.

3. Protective device according to Claim 2, **characterized in that** the control device is in a form such that during the observation mode it produces a warning signal (K2) if, when the cooling mode has been switched on, the appliance temperature (T) first of all falls and then rises again.

4. Protective device according to Claim 3, **characterized in that** the control device is in a form such that during the observation mode it produces the switch-off signal (K3) if, although the appliance temperature (T) first of all falls when the cooling mode has been switched on, it then rises again and in so doing is still above the limit temperature value (TAL).

5. Protective device according to Claim 3 or 4, **characterized in that** the control device is in a form such that during the observation mode it produces the switch-off signal (K3) if, although the appliance temperature first of all falls below the limit temperature value (TAL) when the cooling mode has been switched on, it then rises above the limit temperature value (TAL) again.

6. Protective device according to one of the preceding Claims 2-5, **characterized in that** the control device is in a form such that when the prescribed period of time (tS) has elapsed it first of all produces a warning signal (K2) if the appliance temperature (T) still exceeds the limit temperature value (TAL), and that it produces the switch-off signal (K3) only after a waiting phase has elapsed, provided that the appliance temperature (T) then still exceeds the limit temperature value (TAL).

7. Protective device according to Claim 6, **characterized in that** the length of the waiting phase corresponds to the length of an evaluation interval (t1) in the control device.

8. Protective device according to one of the preceding claims, **characterized in that** the control device is in a form such that - possibly even before the prescribed period of time (tS) has elapsed - it switches from the observation mode to the cooling mode of operation as soon as the appliance temperature (T) drops below a prescribed changeover temperature value (TWL+HWL, TWL).

9. Protective device according to Claim 8, **characterized in that** the prescribed changeover temperature value (TWL+HWL) is less than the limit temperature value (TAL).

10. Protective device according to Claim 9, **characterized in that** the prescribed changeover temperature value (TWL+HWL) corresponds to a prescribed cooling mode warning temperature value (TWL) plus a prescribed hysteresis value (HWL).

11. Protective device according to Claim 8, **characterized in that** the prescribed changeover temperature value is equal to the prescribed cooling mode warning temperature value (TWL).

12. Protective device according to one of the preceding claims, **characterized in that** the control device is in a form such that when it has changed to the cooling mode of operation it produces a warning signal (K2) if the appliance temperature (T) exceeds the cooling mode warning temperature value (TWL).

13. Protective device according to one of the preceding claims, **characterized in that** in each of its modes of operation the control device produces the switch-off signal (K3) as soon as the appliance temperature (T) exceeds the prescribed switch-off temperature value (TA).

14. Protective device according to one of the preceding claims, **characterized in that** in each of its modes of operation the control device produces a warning signal (K2) as soon as the appliance temperature (T) exceeds a prescribed principal warning value (TW).

15. Protective device according to one of the preceding claims, **characterized in that** the limit temperature value (TAL) can be set to be less than the cooling activation temperature value (TL).

16. Method for monitoring the appliance temperature (T) of an appliance (100), particularly for monitoring the appliance temperature of a transformer, of a motor or of a generator, in which
- the appliance temperature (T) is measured,
- when a prescribed cooling activation temperature value (TL) has been exceeded a cooling activation signal (K1) is produced, and
- when a prescribed switch-off temperature value (TA), which is greater than the cooling activation temperature value (TL), has been exceeded a switch-off signal (K3) for switching off the appliance is produced,
**characterized in that**
- when the cooling activation signal (K1) has been produced there is a switch to a cooling mode of operation, with the cooling mode of operation involving an additional check to determine whether the appliance temperature (T) exceeds a limit temperature value (TAL) prescribed for the cooling mode, which is less than the switch-off temperature value (TA), and with the switch-off signal (K3) being produced if the limit temperature value (TAL) has been exceeded.

## Revendications

1. Dispositif (10) de protection pour contrôler la température (T) d'un appareil (100), notamment pour contrôler la température d'appareil d'un transformateur, d'un moteur ou d'une génératrice,
- comprenant une entrée (E10) de grandeur de mesure de la température (T) pour entrer une grandeur (M) de mesure de la température de l'appareil indiquant la température (T) de l'appareil et un dispositif (50) de commande en liaison avec l'entrée (E10) de grandeur de mesure de la température,
- dans lequel le dispositif (50) de commande a une sortie (S50a) de commande pour la sortie d'un signal (K1) d'activation de refroidissement, ainsi qu'est conformé, de manière à ce qu'après dépassement d'une valeur (TL) de température d'activation de refroidissement donnée à l'avance par la température (T) de l'appareil, le signal (K1) d'activation de refroidissement soit produit et de manière à ce qu'après dépassement d'une valeur (TA) de température d'arrêt donnée à l'avance, qui est plus grande que la valeur (TL) de température d'activation de refroidissement, un signal (K3) d'arrêt de l'appareil soit produit,
**caractérisé en ce que**
- le dispositif (50) de commande est conformé de manière à passer, après une production du signal (K1) d'activation du refroidissement, dans un mode de fonctionnement en refroidissement,
- dans lequel il contrôle supplémentairement, dans le mode de fonctionnement en refroidissement, si la température (T) de l'appareil dépasse une valeur (TAL) de température limite donnée à l'avance pour le fonctionnement en refroidissement, qui est plus petite que la valeur (TA) de température d'arrêt, et produit, s'il y a dépassement de la valeur (TAL) de température limite, le signal (K3) d'arrêt.

2. Dispositif de protection suivant la revendication 1, **caractérisé en ce que** le dispositif (50) de commande est conformé de manière à se mettre, après la production du signal (K1) d'activation du refroidissement, d'abord pendant un laps de temps (tS) donné à l'avance dans un mode d'observation, avant de passer dans le mode de fonctionnement en refroidissement.

3. Dispositif de protection suivant la revendication 2, **caractérisé en ce que** le dispositif de commande est conformé de manière à produire un signal (K2) d'alerte pendant le mode d'observation si la température (T) de l'appareil, après l'entrée en fonctionnement en refroidissement, s'abaisse d'abord et ensuite s'élève à nouveau.

4. Dispositif de protection suivant la revendication 3, **caractérisé en ce que** le dispositif de commande est conformé de manière à produire le signal (K3) d'arrêt pendant le mode d'observation si la température (T) de l'appareil, après l'entrée en fonctionnement en refroidissement, s'abaisse certes d'abord mais ensuite s'élève à nouveau et se trouve encore au dessus de la valeur (TAL) de température limite.

5. Dispositif de protection suivant la revendication 3 ou 4, **caractérisé en ce que** le dispositif de commande est conformé de manière à produire le signal (K3) d'arrêt pendant le mode d'observation si la température de l'appareil, après l'entrée en fonctionnement en refroidissement, s'abaisse certes d'abord en dessous de la valeur (TAL) de température limite, mais ensuite s'élève à nouveau au dessus de la valeur (TAL) de température limite.

6. Dispositif de protection suivant l'une des revendications précédentes 2 à 5 **caractérisé en ce que** le dispositif de commande est conformé de manière à produire, après que le laps de temps (tS) donné à l'avance s'est écoulé, un signal (K2) d'alerte si la température (T) de l'appareil dépasse encore la valeur (TAL) de température limite et à produire le signal (K3) d'arrêt seulement après l'expiration d'une phase d'attente, pour autant que la température (T) de l'appareil dépasse encore alors la valeur (TAL) de température limite.

7. Dispositif de protection suivant la revendication 6, **caractérisé en ce que** la longueur de la phase d'attente correspond à la longueur d'un intervalle (tl) d'évaluation du dispositif de commande.

8. Dispositif de protection suivant l'une des revendications précédentes, **caractérisé en ce que** le dispositif de commande est conformé de manière à passer - le cas échéant également avant l'expiration du laps de temps (tS) donné à l'avance - du mode d'observation au mode de fonctionnement en refroidissement dès que la température (T) de l'appareil devient inférieure à une valeur (TWL+HWL, TWL) de température de commutation donnée à l'avance.

9. Dispositif de protection suivant la revendication 8, **caractérisé en ce que** la valeur (TWL+HWL) de température de commutation donnée à l'avance est plus petite que la valeur (TAL) de température limite.

10. Dispositif de protection suivant la revendication 9, **caractérisé en ce que** la valeur (TWL+HWL) de température de commutation donnée à l'avance correspond à une valeur (TWL) de température d'alerte de fonctionnement en refroidissement donnée à l'avance additionnée d'une valeur (HWL) d'hystérésis donnée à l'avance.

11. Dispositif de protection suivant la revendication 8, **caractérisé en ce que** la valeur de température de commutation donnée à l'avance est égale à la valeur (TWL) de température d'alerte de fonctionnement en refroidissement donnée à l'avance.

12. Dispositif de protection suivant l'une des revendications précédentes, **caractérisé en ce que** le dispositif de commande est conformé de manière à produire, après le passage dans le mode de fonctionnement en refroidissement, un signal (K2) d'alerte si la température (T) de l'appareil dépasse la valeur (TWL) de température d'alerte de fonctionnement en refroidissement.

13. Dispositif de protection suivant l'une des revendications précédentes, **caractérisé en ce que** le dispositif de commande produit le signal (K3) d'arrêt dans chacun de ses modes de fonctionnement dès que la température (T) de l'appareil dépasse la valeur (TA) de température d'arrêt donnée à l'avance.

14. Dispositif de protection suivant l'une des revendications précédentes, **caractérisé en ce que** le dispositif de commande produit un signal (K2) d'alerte dans chacun de ses modes de fonctionnement dès que la température (T) de l'appareil dépasse une valeur (TW) d'alerte principale donnée à l'avance.

15. Dispositif de protection suivant l'une des revendications précédentes, **caractérisé en ce que** la valeur (TAL) de température limite peut être réglée à une valeur plus petite que la valeur (TL) de température d'activation du refroidissement.

16. Procédé de contrôle de la température (T) d'un appareil (100), notamment de contrôle de la température d'appareil d'un transformateur, d'un moteur ou d'une génératrice, dans lequel
- on mesure la température (T) de l'appareil,
- après dépassement d'une valeur (TL) de température d'activation du refroidissement donnée à l'avance, on produit un signal (K1) d'activation du refroidissement et
- après dépassement d'une valeur (TA) de température d'arrêt donnée à l'avance, qui est plus grande que la valeur (TL) de température d'activation du refroidissement, on produit un signal (K3) d'arrêt pour arrêter l'appareil,
**caractérisé en ce que**
- après une production du signal (K1) d'activation du refroidissement, on passe dans un mode de fonctionnement en refroidissement, dans lequel, dans le mode de fonctionnement en refroidissement, on contrôle supplémentairement si la température (T) de l'appareil dépasse une valeur (TAL) de température limite donnée à l'avance pour le fonctionnement en refroidissement, qui est plus petite que la valeur (TA) de température d'arrêt, et dans lequel, s'il y a dépassement de la valeur (TAL) de température limite, on produit le signal (K3) d'arrêt.
